# EUROPEAN PATENT APPLICATION

(11) **EP 3 399 436 A1**
(43) Date of publication of application: **07.11.2018**
(21) Application number: 17169466.4
(22) Date of filing: 04.05.2017
(51) Int. Cl.: G06F 17/30

(54) **A TRANSMITTING DEVICE, A RECEIVING DEVICE AND METHODS OF OPERATING THE DEVICES**

(71) Applicant: Koninklijke Philips N.V., 5656 AE Eindhoven (NL)
(72) Inventor: KANE, Grace, 5656 AE Eindhoven (NL); VAN HERPEN, Maarten Marinus Johannes Wilhelmus, 5656 AE Eindhoven (NL)
(74) Representative: de Haan, Poul Erik

(57) **Abstract**

There is provided a transmitting device (100), receiving device (200) and methods of operating the devices. The transmitting and receiving devices (100, 200) each comprise a local database (102, 202) configured to store a plurality of images received from a central database (302), each with an associated unique identifier code. A control unit (104) of the transmitting device (100) is configured to receive a request for retrieval of a unique identifier code associated with an image stored in its local database (102), retrieve from the local database (102) the unique identifier code associated with the image, and transmit the retrieved unique identifier code to the receiving device (200). A control unit (204) of the receiving device (200) is configured to receive the transmitted unique identifier code and retrieve from its local database (202) a corresponding image associated with a stored unique identifier code that matches the received unique identifier code.

## Description

### TECHNICAL FIELD OF THE INVENTION

The invention relates to the field of transmitting and receiving devices and, in particular, to the communication of information between transmitting and receiving devices.

### BACKGROUND TO THE INVENTION

The communication of information between devices is useful in a variety of situations. One example is a situation in which messaging conversations are initiated on the devices. The information that is communicated between devices in messaging conversations can be enhanced by the addition of images to the conversations. This is particularly valuable in specialist applications, such as tele-medicine, remote servicing or tele-servicing.

In tele-medicine, a local health worker can be aided in diagnosing an illness of a patient by the help of a remote doctor. It is useful for the local health worker to transmit images of the patient to the remote doctor as these images can reveal symptoms to the remote doctor. It is also useful for the remote doctor to transmit guidance images to the local health worker. For example, these images can provide instructions for the health worker to perform a particular procedure on the patient. In remote servicing or tele-servicing, a similar application can be used to provide help to customers and local technicians from a remote expert (such as an engineer). For this application, instructional images are particularly helpful since a customer may be untrained or may have limited experience in machine repair. In order to help the customer, a remote engineer can send instructional images to the customer that show the customer the way in which to perform a particular troubleshooting or repair action (such as unplugging a certain component, pushing a button, or replacing a part).

In tele-medicine, it is usually easy for a remote doctor to ask a local health worker for images of patient. However, in tele-servicing, this can be more difficult since the names of machine components can be more difficult to describe. For this reason, reference images can also helpful in tele-servicing as these images can show the expert an image of the component to enable the customer to identify the component. In addition to transmitting images in these specialist applications, it can also be useful to make annotations to the images. For example, annotations can be used to communicate a part of an image that is relevant to a communication.

US 7,761,507 discloses an example of a networked chat and media sharing system, which sends an image identifier and an associated image from a first terminal to a second terminal upon activation of a send button. Then, each time a user of the first terminal changes the focus of the chat back to the image (from another image), the image identifier associated with the image is automatically resent to the second terminal.

However, in any of the applications described above, the transmission of images can be difficult, costly, and time-consuming in environments with poor or unreliable remote connectivity. Therefore, improved devices and methods of operating those devices to communicate information are required.

### SUMMARY OF THE INVENTION

As noted above, it would be valuable to have devices and methods of operating those devices to communicate information, which overcome existing problems.

Therefore, according to a first aspect of the invention, there is provided a transmitting device for transmitting information to a receiving device. The transmitting device comprises a local database configured to store a plurality of images received from a central database, wherein each image is stored with an associated unique identifier code. The transmitting device also comprises a control unit operatively coupled to the local database. The control unit is configured to receive from a user interface a request for retrieval of a unique identifier code associated with an image stored in the local database, retrieve from the local database the unique identifier code associated with the image in response to the received request, and transmit the retrieved unique identifier code to the receiving device.

In some embodiments, the transmitting device may be further configured as a receiving device and the control unit may be further configured to receive from at least one other transmitting device a unique identifier code associated with an image stored in a local database of the at least one other transmitting device, and retrieve from the local database of the transmitting device a corresponding image associated with a stored unique identifier code that matches the received unique identifier code.

In some embodiments, the control unit may be further configured to acquire a new image, generate a unique identifier code to associate with the new image, and control the local database to store the new image with the unique identifier code associated with the new image. In some embodiments, the control unit may be further configured to transmit the new image and the unique identifier code associated with the new image to the central database.

In some embodiments, the control unit may be further configured to acquire an overlay image associated with an image stored in the local database, generate information linking the overlay image to the associated image, and transmit to the receiving device the overlay image and the information linking the overlay image to the associated image. In some embodiments, the control unit may be further configured to control the local database to store the overlay image with the information linking the overlay image to the associated image, transmit to the central database the overlay image with the information linking the overlay image to the associated image for storage; and/or control the user interface to display the overlay image over the associated image.

According to a second aspect of the invention, there is provided a receiving device for receiving information from a transmitting device. The receiving device comprises a local database configured to store a plurality of images received from a central database, wherein each image is stored with an associated unique identifier code. The receiving device also comprises a control unit operatively coupled to the local database. The control unit is configured to receive from the transmitting device a unique identifier code associated with an image stored in a local database of the transmitting device, and retrieve from the local database of the receiving device a corresponding image associated with a stored unique identifier code that matches the received unique identifier code. In some embodiments, the control unit may be further configured to control a user interface to display the corresponding image retrieved from the local database of the receiving device.

In some embodiments, the control unit may be further configured to receive from the central database a new image and a unique identifier code associated with the new image, and control the local database of the receiving device to store the new image with the unique identifier code associated with the new image. In some embodiments, the control unit may be further configured to receive from the transmitting device an overlay image and information linking the overlay image to an image associated with the overlay image, retrieve from the local database of the receiving device the image associated with the received overlay image based on the received information, and control a user interface to display the received overlay image over the retrieved image.

According to a third aspect of the invention, there is provided a system comprising at least one transmitting device as described above and at least one receiving device as described above. In some embodiments, the system may further comprise a central database in communication with the at least one transmitting device and the at least one receiving device. The central database is configured to store a plurality of images with associated unique identifier codes for each image. In some embodiments, the plurality of images stored in the local database of the at least one transmitting device and the plurality of images stored in the local database of the at least one receiving device may be subsets of the plurality of images stored in the central database. In some embodiments, the plurality of images stored in the local database of the at least one transmitting device may be a subset of the plurality of images stored in the local database of the at least one receiving device.

According to a fourth aspect of the invention, there is provided a method of operating a transmitting device. The transmitting device comprises a local database configured to store a plurality of images received from a central database and each image is stored with an associated unique identifier code. The method comprises receiving from a user interface a request for retrieval of a unique identifier code associated with an image stored in the local database, retrieving from the local database the unique identifier code associated with the image in response to the received request, and transmitting the retrieved unique identifier code to the receiving device.

According to a fifth aspect of the invention, there is provided a method of operating a receiving device. The receiving device comprises a local database configured to store a plurality of images received from a central database and each image is stored with an associated unique identifier code. The method comprises receiving from the transmitting device a unique identifier code associated with an image stored in a local database of the transmitting device and retrieving from the local database of the receiving device a corresponding image associated with a stored unique identifier code that matches the received unique identifier code.

According to a sixth aspect of the invention, there is provided a computer program product comprising a computer readable medium, the computer readable medium having computer readable code embodied therein, the computer readable code being configured such that, on execution by a suitable computer or processor, the computer or processor is caused to perform the method or the methods described above.

According to the aspects and embodiments described above, the limitations of existing techniques are addressed. In particular, according to the above-described aspects and embodiments, a local database of the transmitting device and a local database of the receiving device store a plurality of images that are received from a central database.

In this way, the issues encountered with the transmission of images in poor or unreliable remote connectivity environments are overcome. The images that are present in the local databases of both the transmitting and receiving devices do not need to be transmitted in order for the devices to use those images in communications. Instead, the images can be used when one device transmits a unique identifier code for the image by retrieving a corresponding image in its own database. This conserves bandwidth in the system and also maintains the security of the images.

It can thus be ensured that a device that is intended to have a certain image (or a certain subset of images) is synchronized to maintain that image (or subset of images). In this way, it is possible to guard against, for example, file corruption or accidental deletion of images from a local database of a device. In addition, it is further possible to prevent unnecessary images being placed in a local database, which saves data storage capacity and data transfer costs. It is also possible to centrally store information about which devices contain which images (or which subsets of images). It can thus be determined which devices are able to share images using unique identifier codes. The centrally stored information can also be used in multiple ways by an external system. For example, the information can be used by an external system to notify a device (such as via a user interface of the device) which devices have which images (or which subsets of images) stored in their local databases or to prevent communications between devices that have different images (or different subsets of images) stored in their local databases. These benefits can be particularly useful, for example, in respect of systems comprising multiple devices, where any two devices may communicate with each other.

It is also possible to curate a standard set of images by way of the aspects and embodiments described above. This can be particularly useful, for example, in servicing applications (such as tele-servicing applications), where images may need to be continually updated over time to fit with new regulations (or procedures) or due to the discovery of new errors. In these applications, it is useful for all devices to have access to the same up-to-date images. The existence of a central database from which devices receive images ensures that devices can be synchronized and thus there is a consistent quality of service.

Furthermore, as devices receive images from a central database according to the aspects and embodiments described above and synchronization of images is thus possible, the devices are able to make use of any user-generated images (or any user-generated overlay images) that have previously been stored in the central database. This can be particularly useful, for example, in servicing applications (such as tele-servicing applications). For example, in a situation where users generate images showing a previously unseen machine fault during a conversation with engineers, these images can be extracted from the central database by other engineers to assist with the analysis of a future machine fault and for re-use in conversations with customers.

Thus, improved devices and methods of operating those devices to communicate information are provided, which overcome existing problems.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of a transmitting device according to an embodiment;
Figure 2 is a block diagram of a receiving device according to an embodiment;
Figure 3 is an illustration of a system according to an embodiment;
Figure 4 is a flow chart illustrating a method of operating a transmitting device according to an embodiment;
Figure 5 is a flow chart illustrating a method of operating a receiving device according to an embodiment;
Figure 6A is an illustration of central and local databases according to an embodiment;
Figure 6B is an illustration of a system in use according to an embodiment;
Figure 7A is an illustration of central and local databases according to an embodiment;
Figure 7B is an illustration of a system in use according to an embodiment;
Figure 8A is an illustration of central and local databases according to an embodiment; and
Figure 8B is an illustration of a system in use according to an embodiment.

### DETAILED DESCRIPTION OF THE PREFERRED EMBODIMENTS

As noted above, there are provided herein improved devices and methods of operating those devices to communicate information, which overcome the existing problems.

A transmitting device described herein can be any device suitable for transmitting information to a receiving device. Similarly, a receiving device described herein can be any device suitable for receiving information from a transmitting device. Thus, the transmitting device and the receiving device described herein can be any devices that are suitable to communicate with any another device. Examples for the devices include, but are not limited to, a portable electronic device (for example, a mobile device such as a phone, a smartphone, a tablet, a laptop, or any other mobile device), a personal computer, or any other device suitable for communicating with another device.

In any of the embodiments described herein, the transmitting device can be a specialist device and the receiving device can be an untrained user device, or vice versa. For example, one device may be an engineer device while the other device may be a customer device, one device may be a remote doctor device while the other device may be a local health worker device, or similar. In some embodiments, the information that is transmitted and received between the devices can be part of a conversation initiated between the transmitting device and the receiving device.

While the transmitting device 100 is described herein in terms of transmitting, it will be understood that the transmitting device 100 can alternatively or in addition be configured as a receiving device 200. Similarly, while the receiving device 200 is described herein in terms of receiving, it will be understood that the receiving device 200 can alternatively or in addition be configured as a transmitting device 100.

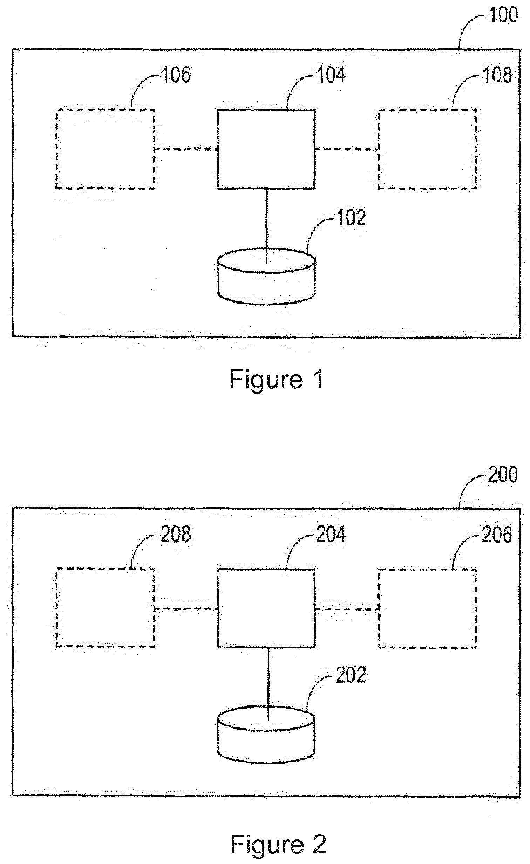

Figure 1 shows a block diagram of a transmitting device 100 according to an embodiment that can be used for transmitting information to a receiving device.

With reference to Figure 1, the transmitting device 100 comprises a local database 102 configured to store a plurality of images received from a central database, where each image is stored with an associated unique identifier code. In some embodiments, the plurality of images stored in the local database 102 of the transmitting device 100 may be a subset of a plurality of images stored in the central database. For example, the plurality of images stored in the local database 102 of the transmitting device 100 can comprise one or more of the same images as (or one or more identical images to) the central database. The images stored in any of the databases described herein can comprise any type of image. In some embodiments, for example, the images can comprise one or more images of medical equipment or parts of medical equipment. However, although an example has been provided for the type of image, it will be understood that the devices and methods described herein can be used in respect of any type of image.

Returning back to Figure 1, the transmitting device 100 also comprises a control unit 104 operatively coupled to the local database 102. The control unit 104 controls the operation of the transmitting device 100 and can implement the method described herein. The control unit 104 of the transmitting device 100 can comprise one or more processors, processing units, multi-core processors or modules that are configured or programmed to control the transmitting device 100 in the manner described herein. In particular implementations, the control unit 104 can comprise a plurality of software modules (or software applications) and/or hardware modules that are each configured to perform, or are for performing, individual or multiple steps of the method described herein.

Briefly, the control unit 104 of the transmitting device 100 is configured to receive from a user interface 106 a request for retrieval of a unique identifier code associated with an image stored in the local database 102 of the transmitting device 100, retrieve from the local database 102 of the transmitting device 100 the unique identifier code associated with the image in response to the received request, and transmit the retrieved unique identifier code to the receiving device. In any of the embodiments described herein, the unique identifier code may, alternatively, be referred to as image identification information.

In some embodiments, the control unit 104 of the transmitting device 100 can be further configured to acquire a new image. In these embodiments, the control unit 104 of the transmitting device 100 is configured to generate a unique identifier code to associate with the new image. In some embodiments, the control unit 104 may be configured to communicate with the central database to determine the unique identifier code. In some embodiments, the control unit 104 of the transmitting device 100 can be configured to control the local database 102 of the transmitting device 100 to store the new image with the unique identifier code associated with the new image according to some embodiments. Alternatively or in addition, in some embodiments, the control unit 104 may be further configured to transmit the new image and the unique identifier code associated with the new image to the central database for storage.

In any of the embodiments described herein, the control unit 104 of the transmitting device 100 can be further configured to acquire an overlay image associated with an image stored in the local database 102 of the transmitting device 100. In some embodiments, the overlay image may be acquired via a user input received at a user interface. For example, a user may use the user interface to draw or create the overlay image. Thus, the control unit 104 of the transmitting device 100 can be configured to acquire the overlay image from a user interface according to some embodiments. Alternatively or in addition, in some embodiments, the control unit 104 of the transmitting device 100 can be configured to acquire the overlay image from a device (for example, a camera), a database of overlay images, or any other component from which an overlay image can be acquired, or any combination thereof. An overlay image can be any image suitable to be overlaid on another image. For example, an overlay image can comprise an annotation (such as an arrow, a circle, or any other shape), a picture, a graphic, text, or similar. The overlay image may be provided on an at least partially transparent background. Although examples have been provided for the form that the overlay image may take, the skilled person will understand that any other overlay image is also possible.

In embodiments where an overlay image is acquired, the control unit 104 of the transmitting device 100 may also be configured to generate information linking the overlay image to the associated image. In other words, the control unit 104 of the transmitting device 100 can be configured to generate information indicating that the overlay image and the associated image are linked. In some embodiments where an overlay image is acquired, the control unit 104 of the transmitting device 100 may also be configured to transmit to the receiving device 200 the overlay image and the information linking the overlay image to the associated image. Alternatively or in addition, the control unit 104 of the transmitting device 100 can be configured to control the local database 102 to store the overlay image with the information linking the overlay image to the associated image. Alternatively or in addition, the control unit 104 of the transmitting device 100 can be configured to transmit to the central database 302 the overlay image with the information linking the overlay image to the associated image for storage. However, in some embodiments, the overlay image may be for one-time use only and thus the overlay image and the information linking the overlay image to the associated image may not be stored in these embodiments.

As illustrated in Figure 1, in some embodiments, the transmitting device 100 may itself comprise a user interface 106. Alternatively, a user interface 106 may be external to (i.e. separate to or remote from) the transmitting device 100. For example, the user interface 106 may be part of another device. The user interface 106 is for use in receiving a user input and, specifically, for receiving the request for retrieval of the unique identifier code. In addition, the user interface 106 may allow a user of the transmitting device 100 to manually enter other instructions or information. The control unit 102 of the transmitting device 100 can be configured to acquire a user input from the user interface 106.

In addition to the user interface 106 being for use in receiving a user input, according to some embodiments, the user interface 106 may also be for use in providing a user of the transmitting device 100 with information resulting from the method described herein. In these embodiments, the control unit 104 of the transmitting device 100 maybe configured to control the user interface 106 to provide information resulting from the method described herein. For example, in some embodiments, the control unit 102 can be further configured to retrieve from the local database 104 of the transmitting device 100, the image associated with the unique identifier code and to control the user interface 106 to render (or output or display) the image retrieved from the local database 102. In any of the embodiments where an overlay image is acquired, the control unit 104 of the transmitting device 100 maybe further configured to control the user interface 106 to render (or output or display) the overlay image over the image associated with the overlay image, which is stored in the local database 102 of the transmitting device 100. In some embodiments, the user interface 106 may be a display screen or a graphical user interface (GUI) and the control unit 102 may control the display screen or graphical user interface to display images, for example, in a chat window. A graphical user interface can, for example, provide a user interface 106 that allows a user to easily navigate commands to the transmitting device 100.

According to some embodiments, as illustrated in Figure 1, the transmitting device 100 may further comprise a communications interface (or circuitry) 108 for enabling the transmitting device 100 to communicate with (or connect to) any components, interfaces, units, databases, and devices that are internal or external to the transmitting device 100. For example, the communications interface 108 of the transmitting device 100 may be configured to communicate with the central database that is external to the apparatus 100 and/or the local database 102 of the transmitting device 100. Similarly, the communications interface 108 of the transmitting device 100 maybe configured to communicate with the user interface 106, which the transmitting device 100 may comprise or which may be external to the transmitting device 100. The transmitting device 100 may also be configured to communicate with (or, more specifically, transmit information to) the receiving device 100 via the communications interface 108. In any of the embodiments described herein, the communications interface 108 of the transmitting device 100 may be configured to communicate with any components, interfaces, units, sensors and devices wirelessly or via a wired connection.

It will be appreciated that Figure 1 only shows the components required to illustrate this aspect of the invention, and in a practical implementation the transmitting device 100 may comprise additional components to those shown. For example, the transmitting device 100 may comprise a battery or other power supply for powering the transmitting device 100 or means for connecting the transmitting device 100 to a mains power supply.

Figure 2 shows a block diagram of a receiving device 200 according to an embodiment that can be used for receiving information from the transmitting device 100.

With reference to Figure 2, the receiving device 200 comprises a local database 202 configured to store a plurality of images received from the central database, where each image is stored with an associated unique identifier code. In some embodiments, the plurality of images stored in the local database 202 of the receiving device 200 maybe a subset of a plurality of images stored in the central database. For example, the plurality of images stored in the local database 202 of the receiving device 100 can comprise one or more of the same images as (or one or more identical images to) the central database. Similarly, in some embodiments, the plurality of images stored in the local database 102 of the transmitting device 100 may be a subset of the plurality of images stored in the local database 202 of the receiving device 200. For example, the plurality of images stored in the local database 102 of the transmitting device 100 can comprise one or more of the same images as (or one or more identical images to) the local database 202 of the receiving device 100.

The receiving device 200 also comprises a control unit 204 operatively coupled to the local database 202. The control unit 204 controls the operation of the receiving device 200 and can implement the method described herein. The control unit 204 of the receiving device 200 can comprise one or more processors, processing units, multi-core processors or modules that are configured or programmed to control the receiving device 200 in the manner described herein. In particular implementations, the control unit 204 can comprise a plurality of software modules (or software applications) and/or hardware modules that are each configured to perform, or are for performing, individual or multiple steps of the method described herein.

Briefly, the control unit 204 of the receiving device 200 is configured to receive from the transmitting device 100 a unique identifier code associated with an image stored in the local database 102 of the transmitting device 100 and retrieve from the local database 202 of the receiving device 200 a corresponding image associated with a stored unique identifier code that matches the received unique identifier code. As mentioned earlier, the unique identifier code may, alternatively, be referred to as image identification information in any of the embodiments described herein.

In some embodiments, the control unit 204 of the receiving device 200 can be further configured to receive from the central database a new image and a unique identifier code associated with the new image. Thus, in embodiments where the control unit 104 of the transmitting device 100 is configured to transmit a new image and the unique identifier code associated with the new image to the central database, the central database can upload the new image and the unique identifier code associated with the new image to the receiving device 200. In this way, the new image will then be available at the receiving device 200 when the new image is needed. In these embodiments, the control unit 204 of the receiving device 200 may also be configured to control the local database 202 of the receiving device 200 to store the new image with the unique identifier code associated with the new image. In some embodiments, the receiving device 200 may comprise a ledger of devices (or device types) for which the receiving device 200 is configured to receive new or updated images and for which the local database 202 of the receiving device 200 can be configured to store those received images. For example, the receiving device 200 may comprise a ledger indicating a specific type of ultrasound device and a specific type of patient monitor device such that only images related to these specific devices will be stored in the local database of the receiving device 200. Alternatively or in addition, the transmitting device 100 may comprise a ledger of devices (or device types) for which the transmitting device 100 is configured to receive new or updated images and for which the local database 102 of the transmitting device 100 is configured to store those received images.

According to any of the embodiments described herein, the control unit 204 of the receiving device 200 can be further configured to receive from the transmitting device 100 an overlay image and information linking the overlay image to an image associated with the overlay image. In these embodiments, the control unit 204 of the receiving device 200 may be configured to retrieve from the local database 202 of the receiving device 200 the image associated with the received overlay image based on the received information. In some embodiments, the control unit 204 of the receiving device 200 may also be configured to control a user interface to display the received overlay image over the retrieved image.

As illustrated in Figure 2, in some embodiments, the receiving device 200 may comprise a user interface 206 for use in receiving a user input. Alternatively, the user interface 206 of the receiving device 200 maybe external to (i.e. separate to or remote from) the receiving device 200. For example, the user interface 206 of the receiving device 200 may be part of another device. As mentioned earlier, in some embodiments, the receiving device 200 maybe further configured as a transmitting device 100. In these embodiments, the user interface 206 of the receiving device 200 can be configured to receive a request for retrieval of the unique identifier code (as described earlier). In addition, the user interface 206 of the receiving device 200 may allow a user of the receiving device 200 to manually enter other instructions or information. The control unit 202 of the receiving device 200 can be configured to acquire a user input from the user interface 206.

Alternatively or in addition to the user interface 206 of the receiving device 200 being for use in receiving a user input, according to some embodiments, the user interface 206 of the receiving device 200 may also be for use in providing a user of the receiving device 200 with information resulting from the method described herein. In these embodiments, the control unit 204 of the receiving device 200 may be configured to control the user interface 206 to provide information resulting from the method described herein. For example, in some embodiments, the control unit 202 of the receiving device 200 may be configured to control a user interface 206 to render (or output or display) the corresponding image retrieved from the local database 202 of the receiving device 200. Alternatively or in addition, in embodiments where an overlay image is received, the control unit 204 of the receiving device 200 may also be configured to control the user interface 206 of the receiving device 200 to render (or output or display) the received overlay image over the image associated with the received overlay image, which is retrieved from the local database 202 of the receiving device 200. In some embodiments, the user interface 206 may be a display screen or a graphical user interface (GUI) and the control unit 202 may control the display screen or graphical user interface to display images, for example, in a chat window. A graphical user interface can, for example, provide a user interface 206 that allows a user to easily navigate commands to the receiving device 200.

According to some embodiments, as illustrated in Figure 2, the receiving device 200 may further comprise a communications interface (or circuitry) 208 for enabling the receiving device 200 to communicate with (or connect to) any components, interfaces, units, databases, and devices that are internal or external to the receiving device 200. For example, the communications interface 208 of the receiving device 200 may be configured to communicate with the central database that is external to the apparatus 100 and/or the local database 202 of the receiving device 200. Similarly, the communications interface 208 of the receiving device 200 maybe configured to communicate with the user interface 206, which the receiving device 200 may comprise or which may be external to the receiving device 200. The receiving device 200 may also be configured to communicate with (or, more specifically, transmit information to) the transmitting device 100 via the communications interface 208. In any of the embodiments described herein, the communications interface 208 of the receiving device 200 may be configured to communicate with any components, interfaces, units, sensors and devices wirelessly or via a wired connection.

It will be appreciated that Figure 2 only shows the components required to illustrate this aspect of the invention, and in a practical implementation the receiving device 200 may comprise additional components to those shown. For example, the receiving device 200 may comprise a battery or other power supply for powering the receiving device 200 or means for connecting the receiving device 200 to a mains power supply.

As mentioned earlier, in any of the embodiments described herein, it will be understood that the transmitting device 100 can further be configured as a receiving device 200. In other words, the transmitting device 100 may further be configured in the manner described above for the receiving device 200 with reference to Figure 2. In these embodiments, the control unit 102 of the transmitting device 100 maybe further configured to receive from at least one other transmitting device a unique identifier code associated with an image stored in a local database of the at least one other transmitting device. The control unit 102 of the transmitting device 100 may also be configured to retrieve from the local database 102 of the transmitting device 100 a corresponding image associated with a stored unique identifier code that matches the received unique identifier code. In a similar manner, it will be understood that the receiving device 200 can further be configured as a transmitting device 100 in the manner described above with reference to Figure 1.

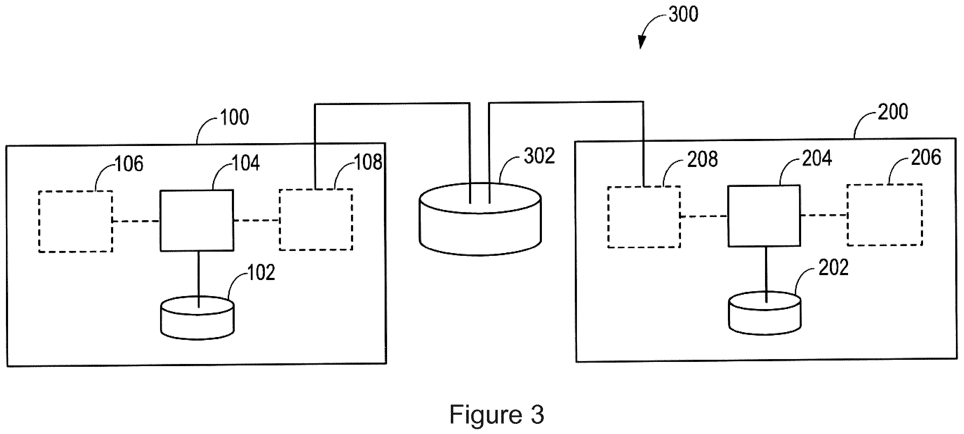

Figure 3 is an illustration of a system 300 according to an embodiment. With reference to Figure 3, the system 300 can comprise at least one transmitting device 100 configured to operate in accordance with any of the embodiments of the transmitting device 100 described herein and at least one receiving device 200 configured to operate in accordance with any of the embodiments of the receiving device 200 described herein. In some embodiments, the system 300 can be a communications system, such as a system for chat-based communication.

As illustrated in Figure 3, the system 300 can also comprise the central database 302 in communication with the at least one transmitting device 100 and the at least one receiving device 200. Although the at least one transmitting device 100 and the at least one receiving device 200 are illustrated in Figure 3 as being in communication via the central database 302, it will be understood that in any of the embodiments described herein the at least one transmitting device 100 and the at least one receiving device 200 may also communicate with each other directly. The central database 302 is configured to store a plurality of images with associated unique identifier codes for each image. As mentioned earlier, in some embodiments, the plurality of images stored in the local database 102 of the at least one transmitting device 100 and the plurality of images stored in the local database 202 of the at least one receiving device 200 may be subsets of the plurality of images stored in the central database 302. In this way, for example, the central database 302 maybe configured to store all images that may be used in communications between the at least one transmitting device 100 and the at least one receiving device 200. In some embodiments, the central database 302 can be configured to store a unique identifier code associated with each of the subsets of images stored in the central database 302.

Similarly, in some embodiments, the plurality of images stored in the local database 102 of the at least one transmitting device 100 may be a subset of the plurality of images stored in the local database 202 of the at least one receiving device 200. The local database 102 of the at least one transmitting device 100 and the local database 202 of the at least one receiving device 200 can comprise at least some of the same subsets of images such that the devices 100, 200 can provide these images in communications with another device without transmitting the actual image.

In some embodiments, any one or more of the database 102 of the at least one transmitting device, the database of the at least one receiving device 202, and the central database 302, can store one or more subsets of images. These subsets of images can be referred to as "standard databases". The one or more subsets of images stored by a database can themselves comprise one or more subsets of images according to some embodiments. For example, where the one or more subsets of images stored by a database comprise one or more instructional images for a particular type of equipment, the one or more instructional images for a particular type of equipment can themselves comprise one or more subsets of images, such as one or more instructional images for a specific equipment model.

According to some embodiments, when an image is added to the central database 302, the image may also be added to the transmitting devices 100 and the receiving devices 200 that are known to store the image in their local databases 102, 202. In some embodiments, for example, the central database 302 can be configured to maintain synchronization between the local databases 102, 202 of the at least one transmitting device 100 and the at least one receiving device 200. In some embodiments, any one or more of the local database 102 of the at least one transmitting device 100, the database of 202 of the at least one receiving device 200, and the central database 302 can be updated or added to by a user or device with access to the central database 302.

According to some embodiments, the central database 302 may comprise one or more description files that indicate information associated with each of the images stored in the central database 302. The information associated with each of the images that is stored in the central database 302 may, for example, comprise a location of the image in the central database 302, the unique identifier code associated with the image, a unique identifier code associated with a known subset (or subsets) of images in which the image is contained, or any other information associated with the image. Alternatively or in addition, in some embodiments, the central database 302 may comprise a description file comprising information identifying each of the at least one transmitting devices 100 and the at least one receiving devices 200 in the system 300. This description file may also comprise unique identifier codes associated with the subsets of images stored in the databases 102, 202 of the at least one transmitting devices 100 and the at least one receiving devices 200. This can be useful where one or more of the at least one transmitting and receiving devices 100, 200 have different subsets of images stored in their respective databases 102, 202. For example, in embodiments where an image is updated in the central database 302 and the central database 302 is configured to also update the image in the transmitting and receiving devices 100, 200 comprising a database 102, 202 that stores a subset comprising the image, the central database 302 needs to know which transmitting and receiving devices 100, 200 contain which subset of images.

According to some embodiments, similar to the central database 302, the local databases 102, 202 of the at least one transmitting device 100 and the at least one receiving device 200 may comprise one or more description files that indicate information associated with each of the images stored in that database 102, 202. The information associated with each of the images that is stored in a local database 102, 202 may, for example, comprise a location of the image in the local database 102, 202 in which the image is stored, the unique identifier code associated with the image, or any other information associated with the image (such as a location of a thumbnail image corresponding to the image, a name of the image, or similar).

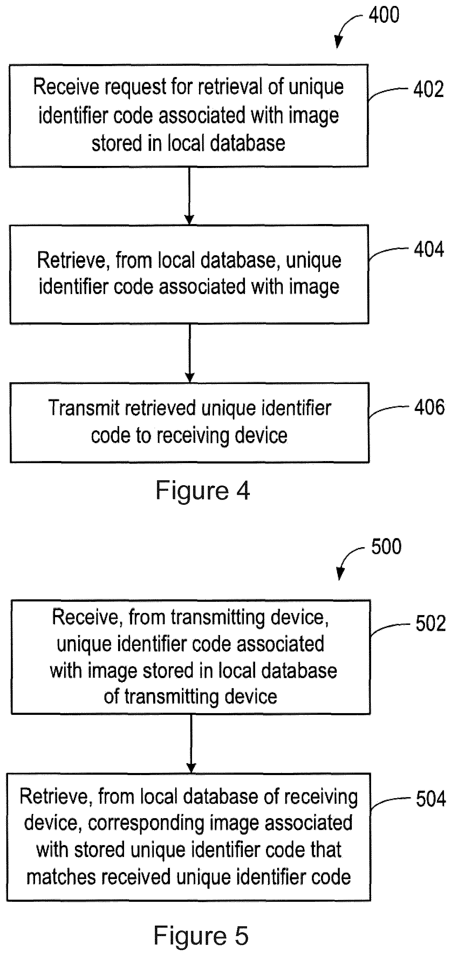

Figure 4 is a flow chart illustrating a method 400 according to an embodiment for use in operating the transmitting device 100. As mentioned earlier, the transmitting device 100 comprises the local database 102 configured to store a plurality of images received from the central database 302 and each image is stored with an associated unique identifier code. The method 400 of Figure 4 is generally performed by or under the control of the control unit 104 of the transmitting device 100.

With reference to Figure 4, at block 402, a request for retrieval of a unique identifier code associated with an image stored in the local database 102 of the transmitting device 100 is received from the user interface 106 of the transmitting device 100. More specifically, the control unit 104 of the transmitting device 100 receives this request from the user interface 106 of the transmitting device 100. As previously mentioned, the unique identifier code may, alternatively, be referred to as image identification information. The request is a command received at the user interface 106 of the transmitting device 100 from a user of the transmitting device 100. In some embodiments, the request maybe received while the transmitting device 100 is engaging in a communication (such as a messaging conversation) with the receiving device 200. Alternatively, in other embodiments, the receipt of the request at the control unit 104 of the transmitting device 100 can initiate such a communication with the receiving device 200. In some embodiments, the command can comprise a selection of an image from a plurality of images or a selection of a thumbnail of an image from a plurality of thumbnail images corresponding to the images stored in the database 102 of the transmitting device 100. The thumbnail images may be stored in a separate database to the images to which they correspond and may be linked to the database 102 that comprises the images themselves.

At block 404 of Figure 4, in response to the request received for retrieval of a unique identifier code associated with an image stored in the local database 102 of the transmitting device 100, the unique identifier code associated with the image is retrieved from the local database 102. More specifically, the control unit 104 of the transmitting device 100 retrieves the unique identifier code associated with the image from the local database 102 of the transmitting device 100. Then, at block 406 of Figure 4, the retrieved unique identifier code is transmitted to the receiving device 200 (for example, via the communications interface 108 of the transmitting device 100). More specifically, the control unit 104 of the transmitting device 100 transmits the retrieved unique identifier code to the receiving device 200. The retrieved unique identifier code maybe transmitted to the receiving device 200 by way of a transmission containing the retrieved unique identifier code. The transmitting device 100 may use any suitable communication mechanism for the transmission including, but not limited to, a peer-to-peer communication mechanism, a client-server communication mechanism, or any other suitable communication mechanism. A client-server communication mechanism may be valuable, for example, where the system 300 is for use in environments where connectivity is poor or unreliable. A client-server communication mechanism can also be useful in avoiding a situation wherein a new image is added to the database of one device and it is not possible to transmit the new image to another device.

Although not illustrated in Figure 4, in any of the embodiments described herein, the method 400 of Figure 4 can further comprise the control unit 102 retrieving from the local database 104 of the transmitting device 100 the image associated with the unique identifier code and also the control unit 102 controlling the user interface 106 of the transmitting device 100 to render (or output or display) the image retrieved from the local database 102.

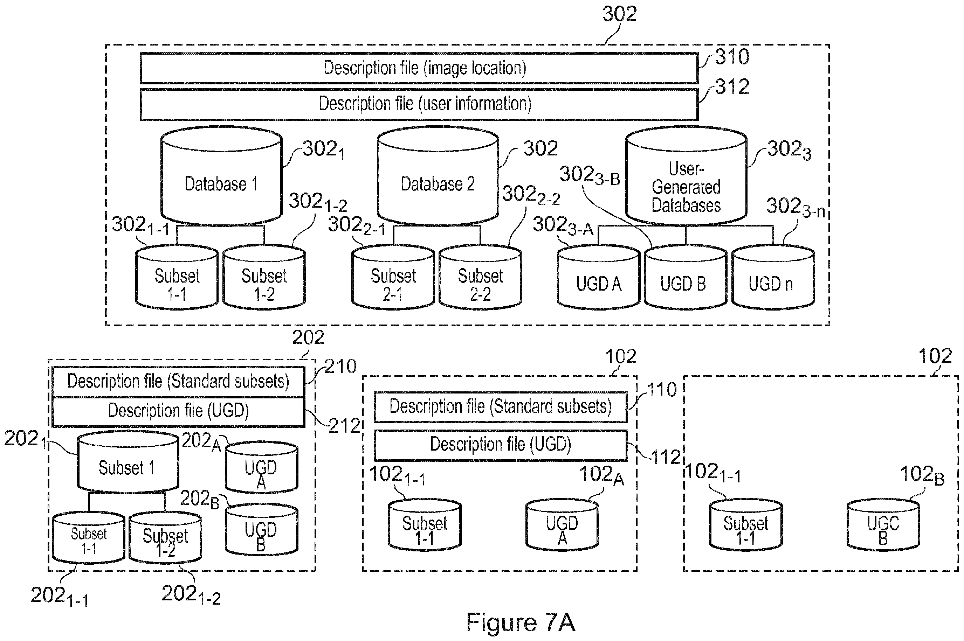

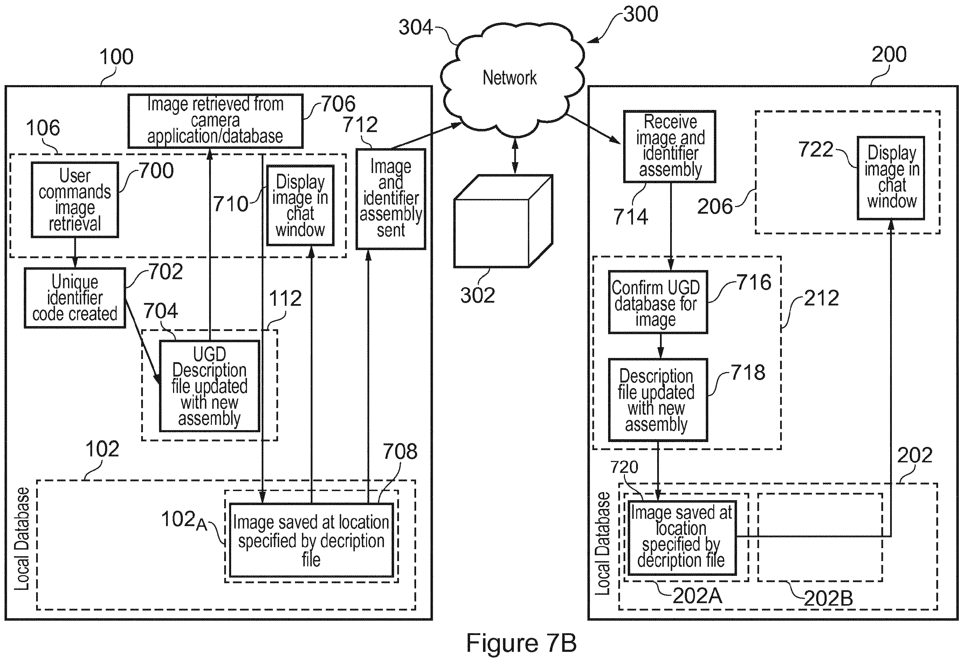

Although also not illustrated in Figure 4, in some embodiments, the method 400 of Figure 4 may further comprise the control unit 104 of the transmitting device 100 acquiring a new image (for example, in any of the manners described earlier). In these embodiments, the method 400 of Figure 4 also comprises the control unit 104 of the transmitting device 100 generating a unique identifier code to associate with the new image. In some of these embodiments, the method 400 of Figure 4 may further comprise the control unit 104 of the transmitting device 100 controlling the local database 102 of the transmitting device 100 to store the new image with the unique identifier code associated with the new image according to some embodiments and/or transmitting the new image and the unique identifier code associated with the new image to the central database 302 for storage. Once the new image has been added to the central database 302, the transmitting device 100 can insert the image in communications with the receiving device 200 without having to transmit the image to the receiving device 200. An example embodiment illustrating a method involving the acquisition of a new image will be explained later with reference to Figures 7A and 7B.

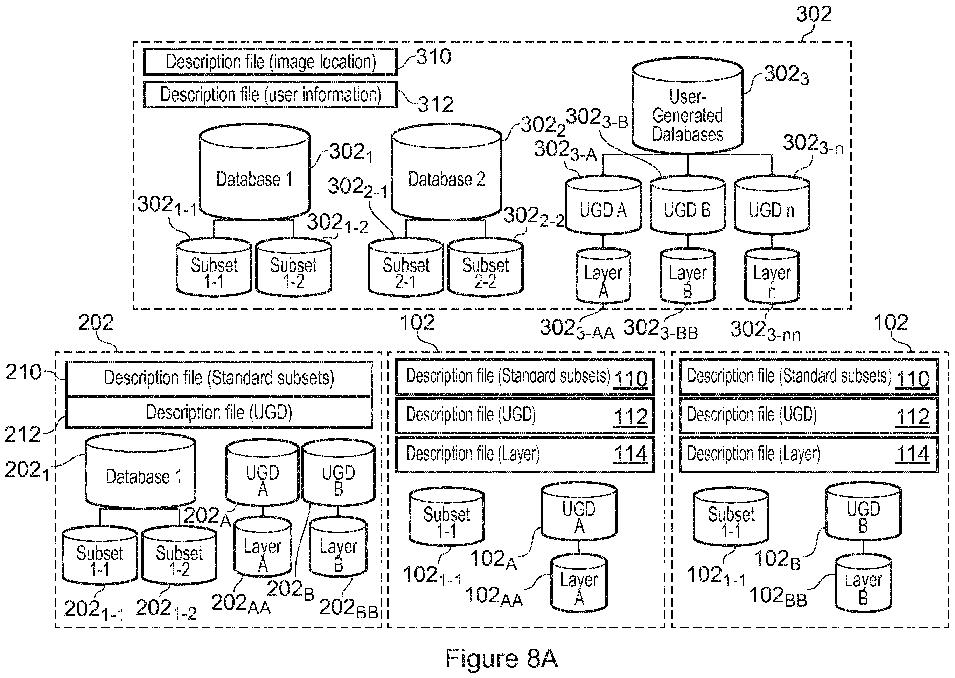

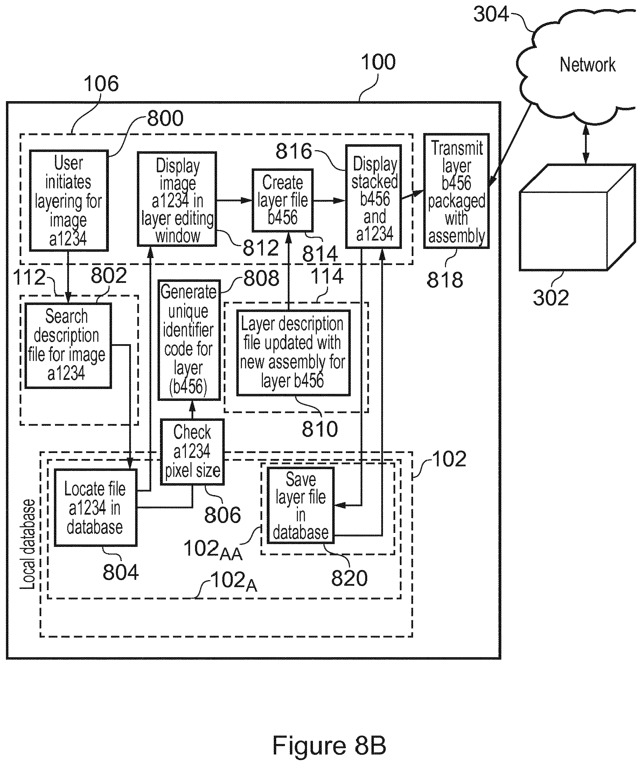

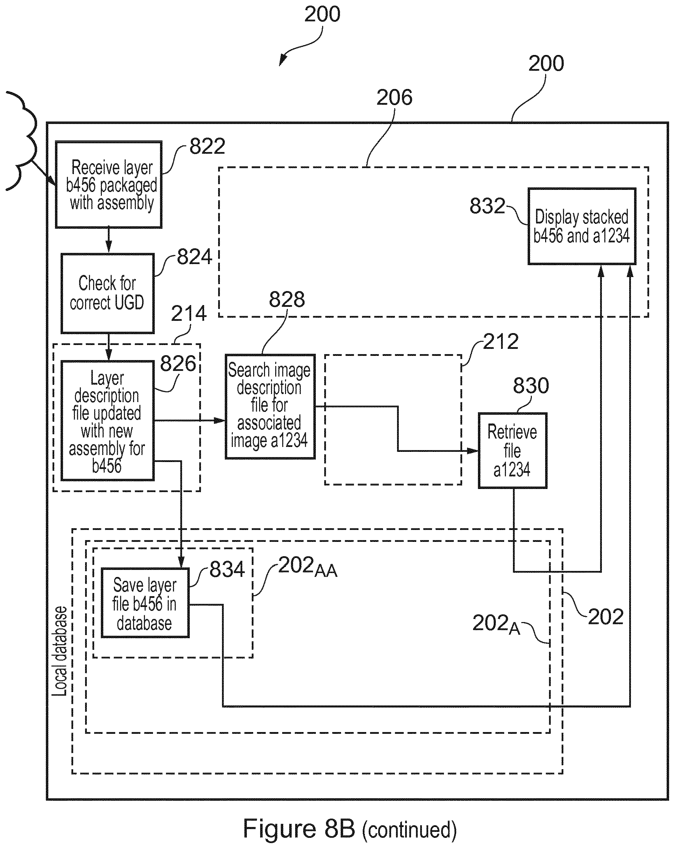

Although also not illustrated in Figure 4, in any of the embodiments described herein, the method 400 of Figure 4 can further comprise the control unit 104 of the transmitting device 100 acquiring an overlay image associated with an image stored in the local database 102 of the transmitting device 100 (for example, in any of the manners described earlier). In these embodiments, the method 400 of Figure 4 may also comprise the control unit 104 of the transmitting device 100 generating information linking the overlay image to the associated image. In some of these embodiments, the method 400 of Figure 4 may further comprise the control unit 104 of the transmitting device 100 transmitting to the receiving device 200 the overlay image and the information linking the overlay image to the associated image, the control unit 104 of the transmitting device 100 controlling the local database 102 of the transmitting device 100 to store the overlay image with the information linking the overlay image to the associated image, and/or the control unit 104 of the transmitting device 100 transmitting to the central database 302 the overlay image with the information linking the overlay image to the associated image for storage. In any of the embodiments where an overlay image is acquired, the method 400 of Figure 4 can further comprise the control unit 104 of the transmitting device 100 controlling the user interface 106 of the transmitting device 100 to render (or output or display) the overlay image over the associated image. An example embodiment illustrating a method involving the acquisition of an overlay image will be explained later with reference to Figures 8A and 8B.

Figure 5 is a flow chart illustrating a method 500 according to an embodiment for use in operating the receiving device 200. As mentioned earlier, the receiving device 200 comprises the local database 202 configured to store a plurality of images received from the central database 302 and each image is stored with an associated unique identifier code. The method 500 of Figure 5 is generally performed by or under the control of the control unit 204 of the receiving device 200.

With reference to Figure 5, at block 502, the unique identifier code associated with the image stored in the local database 102 of the transmitting device 100 is received at the receiving device 200 from the transmitting device 100. More specifically, the control unit 204 of the receiving device 200 receives the unique identifier code from the transmitting device 100 (for example, via the user interface 208 of the receiving device 200). As previously mentioned, the unique identifier code may, alternatively, be referred to as image identification information.

At block 504 of Figure 5, a corresponding image associated with a stored unique identifier code that matches the received unique identifier code is retrieved from the local database 202 of the receiving device 200. More specifically, the control unit 204 of the receiving device 200 retrieves the corresponding image from the local database 202 of the receiving device 200. For example, in embodiments where the local database 202 of the receiving device 200 comprises a description file that indicates information associated with each of the images stored in that local database 202, the control unit 204 of the receiving device 200 may parse (or search) the description file to find the stored unique identifier code that matches the received unique identifier code and the location of the corresponding image in the local database 202 of the receiving device 200 in order to retrieve the corresponding image from the local database 202.

Although not illustrated in Figure 5, in some embodiments, the method 500 of Figure 5 may further comprise the control unit 204 of the receiving device 200 controlling the user interface 206 of the receiving device 200 to render (or output or display) the corresponding image retrieved from the local database 202 of the receiving device 200.

Although also not illustrated in Figure 5, in some embodiments, the method 500 of Figure 5 may further comprise the control unit 204 of the receiving device 200 receiving from the central database 302 a new image and a unique identifier code associated with the new image. In these embodiments, the method 500 of Figure 5 may also comprise the control unit 204 of the receiving device 200 controlling the local database 202 of the receiving device 200 to store the new image with the unique identifier code associated with the new image.

Although also not illustrated in Figure 5, in any of the embodiments described herein, the method 500 of Figure 5 may also comprise the control unit 204 of the receiving device 200 receiving from the transmitting device 100 an overlay image and information linking the overlay image to an image associated with the overlay image. In these embodiments, the method 500 of Figure 5 may further comprise the control unit 204 of the receiving device 200 retrieving from the local database 202 of the receiving device 200 the image associated with the received overlay image based on the received information. In some of these embodiments, the method 500 of Figure 5 may also comprise the control unit 204 of the receiving device 200 controlling the user interface 206 of the receiving device 200 to display the received overlay image over the retrieved image. In this way, an overlay image can be transmitted by the transmitting device 100 independently of the associated image since it is possible for that associated image to be retrieved from the local database 202 of the receiving device 200. This conserves bandwidth in the system 300, particularly since overlay images can be of a lower-size than the images themselves.

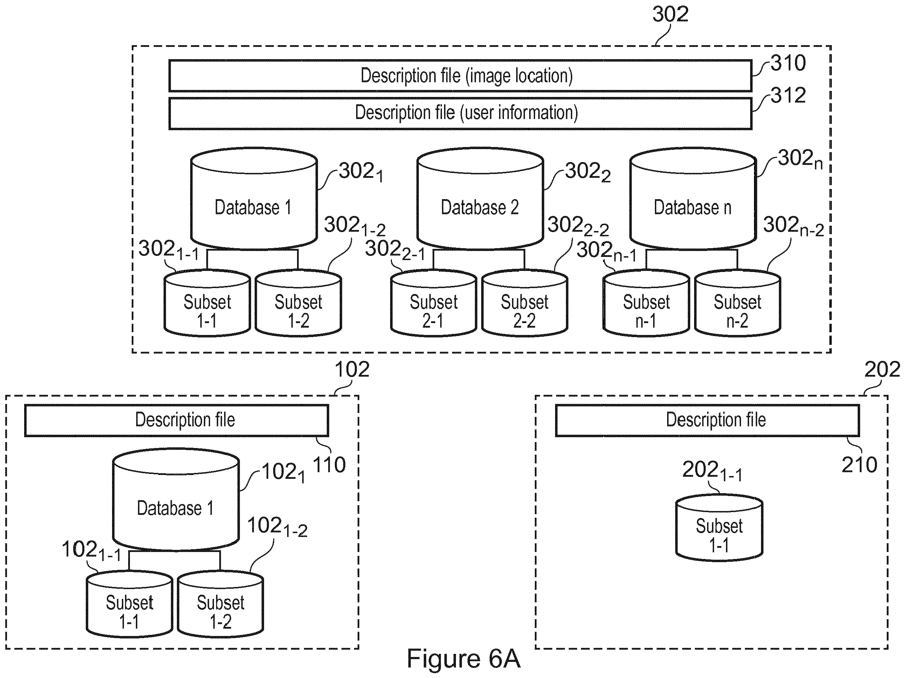

Figure 6A is an illustration of an example database structure according to an embodiment. In this illustrated example embodiment, the central database 302 comprises a plurality of standard databases 302₁, 302₂, 302ₙ (for example, which may store images of an equipment type) and each of the standard databases 302₁, 302₂, 302ₙ comprise a plurality of image subsets 302₁₋₁, 302₁₋₂, 302₂₋₁, 302₂₋₂, 302ₙ₋₁, 302ₙ₋₂ (for example, which may store images of a particular equipment model).

As illustrated in Figure 6A, in this example embodiment, the database 102 of the transmitting device 100 comprises one standard database 102₁ and all of its subsets 102₁₋₁, 102₁₋₂, which corresponds to the standard database 302₁ of the central database 302 and all of its subsets 302₁₋₁, 302₁₋₂. In contrast, the database 202 of the receiving device 200 in this example embodiment comprises only one subset 202₁₋₁, which corresponds to the subset 302₁₋₁ comprised in the standard database 302₁ of the central database 302. According to this example embodiment, the central database 302 comprises a description file 310 that indicates information associated with each of the images stored in the central database 302 (for example, the image location) and a description file 312 comprising information identifying the transmitting device 100 and the receiving device 200 (for example, user information). The local databases 102, 202 of the transmitting device 100 and the receiving device 200 also each comprise a description file 110 that indicates information associated with the images stored in that database 102, 202. In this example, the user of the receiving device 200 only owns a specific equipment model, due to which the receiving device 200 only needs to be able to display images associated with this model. This saves storage space on the receiving device 200. It also means that the user of the transmitting device 100 can only use images that are stored in the local database 202 of the receiving device 200 when communicating with the receiving device 200, unless additional images are added to the local database 202 of the receiving device 200.

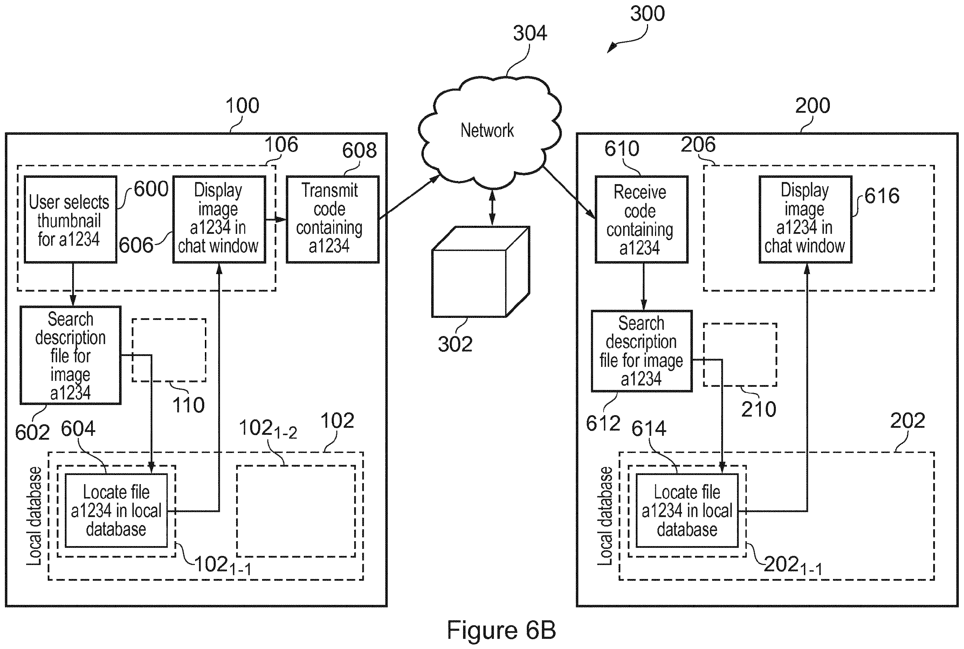

Figure 6B is an example illustration of a system 300 in use according to an embodiment. In this example embodiment, the database 102 of the transmitting device 100, the database 202 of the receiving device 200, and the central database 302 can have the configuration illustrated in Figure 6A. The transmitting device 100, the receiving device 200, and the central database 302 communicate over a network 304. The method that will be described with reference to the transmitting device 100 is generally performed by or under the control of the control unit 104 of the transmitting device 100 and, similarly, the method that will be described with reference to the receiving device 200 is generally performed by or under the control of the control unit 204 of the receiving device 200.

With reference to Figure 6B, at block 600, a request for retrieval of a unique identifier code associated with an image stored in the local database 102 of the transmitting device 100 is received from the user interface 106 of the transmitting device 100. Specifically, in this example embodiment, the user of the transmitting device 100 selects on the user interface 106 of the transmitting device 100 a thumbnail image corresponding to an image "a1234". At block 602 of Figure 6B, in response to the received request, the description file 110 of the transmitting device 100 is searched for the image "a1234". At block 604, the image "a1234" is located in the local database 102 of the transmitting device 100 based on the information comprised in the description file 110 of the transmitting device 100. More specifically, the image "a1234" is located in the subset 102₁₋₁ of the local database 102 of the transmitting device 100. The unique identifier code associated with the image "a1234" is thus retrieved from the local database 102 of the transmitting device 100.

In this example embodiment, the image associated with the unique identifier code is also retrieved from the local database 104 of the transmitting device 100 and, at block 606 of Figure 6B, the user interface 106 of the transmitting device 100 is controlled to display the retrieved image (for example, in a chat window). At block 608 of Figure 6B, the unique identifier code retrieved for the image "a1234" from the local database 102 of the transmitting device 100 is transmitted to the receiving device 200 over the network 304.

At block 610 of Figure 6B, the unique identifier code associated with the image "a1234" stored in the local database 102 of the transmitting device 100 is received at the receiving device 200 from the transmitting device 100. At block 612 of Figure 6B, the description file 210 of the receiving device 200 is searched for the image "a1234" by searching for a stored unique identifier code that matches the received unique identifier code. At block 614 of Figure 6B, a stored unique identifier code that matches the received unique identifier code is located in the local database 202 of the receiving device 200 based on the information comprised in the description file 210 of the receiving device 200. More specifically, a stored unique identifier code that matches the received unique identifier code is located in the subset 202₁₋₁ comprised in the local database 202 of the receiving device 200.

A corresponding image associated with the stored unique identifier code that matches the received unique identifier code can then be retrieved from the subset 202₁₋₁ comprised in local database 202 of the receiving device 200. At block 616 of Figure 6B, the user interface 206 of the receiving device 200 is controlled to display the corresponding image that is retrieved (for example, in a chat window). In this way, a user of the transmitting device 100 can cause the receiving device 200 to display an image (for example, through insertion of the image into a chat conversation) by sending the receiving device 200 a unique identifier code corresponding to an image that is present in both of their local databases 102, 202.

Figure 7A is an illustration of an example database structure according to another embodiment. In this illustrated example embodiment, the central database 302 comprises a plurality of standard databases 302₁, 302₂ and each of the standard databases 302₁, 302₂ comprise a plurality of image subsets 302₁₋₁, 302₁₋₂, 302₂₋₁, 302₂₋₂. The central database 302 according to this example embodiment also comprises one or more user-generated databases 302₃, which comprise a plurality of user-generated image subsets 302_{3-A}, 302_{3-B}, 302₃₋ₙ. A user-generated database is a database to which new user-generated images may be added and which can be populated by images generated by and transmitted between devices that are in communication. In this illustrated example embodiment, user-generated images are stored in one or more user-generated databases 302₃, which are separate databases to the standard databases 302₁, 302₂. However, it will be understood that, in other example embodiments, the user-generated images may be stored as a subset database of a standard database 302₁, 302₂, or even as part of an existing subset database 302₁₋₁, 302₁₋₂, 302₂₋₁, 302₂₋₂ of a standard database 302₁, 302₂. In this way, the user-generated image can be linked to a specific device (or device type).

As illustrated in Figure 7A, in this example embodiment, the database 202 of the receiving device 200 comprises a subset 202₁. The subset 202₁ itself comprises a plurality of subsets 202₁₋₁, 202₁₋₂, which correspond to the subsets 302₁₋₁, 302₁₋₂ comprised in the standard database 302₁ of the central database 302. In this example embodiment, the database 202 of the receiving device 200 also comprises a plurality of user-generated image subsets 202_{A}, 202_{B}, which correspond to the user-generated image subsets 302_{3-A}, 302_{3-B} comprised in the user-generated database 302₃ of the central database 302. The user-generated image subsets 302_{3-A}, 302_{3-B} comprised in the user-generated database 302₃ of the central database 302 comprise identical images to the user-generated image subsets 202_{A}, 202_{B} comprised in the database 202 of the receiving device 200.

The receiving device 200 is in communication with two transmitting devices 100, which each comprise a database 102, according to this example embodiment. The database 102 of one of the transmitting devices 100 comprises a subset 102₁₋₁, which corresponds to the subset 302₁₋₁ comprised in the standard database 302₁ of the central database 302, and a user-generated image subset 102_{A}, which corresponds to the user-generated image subset 302_{3-A} comprised in the user-generated database 302₃ of the central database 302. The user-generated image subset 302_{3-A} comprised in the user-generated database 302₃ of the central database 302 comprises identical images to the user-generated image subset 102_{A} comprised in the database 102 of this transmitting device 100. The database 102 of the other transmitting device 100 comprises the subset 102₁₋₁, which corresponds to the subset 302₁₋₁ comprised in the standard database 302₁ of the central database 302, and a user-generated image subset 102_{B}, which corresponds to the user-generated image subset 302_{3-B} comprised in the user-generated database 302₃ of the central database 302. The user-generated image subset 302_{3-B} comprised in the user-generated database 302₃ of the central database 302 comprises identical images to the user-generated image subset 102_{B} comprised in the database 102 of this transmitting device 100.

According to this example embodiment, the central database 302 comprises a description file 310 that indicates information associated with each of the images stored in the central database 302 (for example, the image location) and a description file 312 comprising information identifying the transmitting device 100 and the receiving device 200 (for example, user information). The local database 200 of the receiving device and the local database 102 of one of the transmitting devices 100 each comprise a description file 210, 110 that indicates information associated with the images stored in the subsets 202₁, 202₁₋₁, 202₁₋₂, 102₁₋₁ of that database 202, 102 and a description file 212, 112 that indicates information associated with the images stored in the user-generated subsets 202_{A}, 202_{B}, 102_{A}, 102_{B} of that database 202, 102. A description file 112, 212 that indicates information associated with the images stored in the user-generated subsets 102_{A}, 102_{B}, 202_{A}, 202_{B} of a database 102, 202 can comprise information identifying the unique identifier code for each user-generated database 102_{A}, 102_{B}, 202_{A}, 202_{B} within the device 100, 200 comprising the database 102, 202, the unique identifier code for each image within the user-generated databases 102_{A}, 102_{B}, 202_{A}, 202_{B}, and the location of each image within a particular user-generated database 102_{A}, 102_{B}, 202_{A}, 202_{B}.

The database structure of Figure 7A may, for example, be useful where the receiving device 200 is an engineer device used by an engineer for a particular equipment type, which is stored in the standard database 302₁ of the central database 302, to service users (or customers) of two transmitting devices 100 with the same equipment model, which is stored in the subset 102₁₋₁, 202₁₋₁, 302₁₋₁. For example, a customer may wish to send images to an engineer to show a problem with a device. Alternatively, the receiving device 200 may be the customer device and the transmitting devices 100 may be the engineer device 100. For example, an engineer may wish send images to a customer to instruct the customer how to fix a device. It will be understood that it is also possible for one or more of a customer device and an engineer device to act as both a receiving device and a transmitting device. Returning back to Figure 7A, the receiving device 200 may have access to the user-generated databases 102_{A}, 102_{B} of both transmitting devices 100. The central database 302 stores the user-generated databases of all transmitting devices 100. When a new device is added to a communication, a unique identifier code for the device is generated in the central database for the user-generated database of that device.

Figure 7B is an example illustration of a system 300 in use according to an embodiment. Figure 7B illustrates a method performed by the system 300 when a command is given by a user to transmit a new image from one device to another during communication.

In this example embodiment, the database 102 of the transmitting device 100, the database 202 of the receiving device 200, and the central database 302 can have the configuration illustrated in Figure 7A. The transmitting device 100, the receiving device 200, and the central database 302 communicate over a network 304. The method that will be described with reference to the transmitting device 100 is generally performed by or under the control of the control unit 104 of the transmitting device 100 and, similarly, the method that will be described with reference to the receiving device 200 is generally performed by or under the control of the control unit 204 of the receiving device 200.

With reference to Figure 7B, at block 700, a request for retrieval of a unique identifier code associated with an image stored in the local database 102 of the transmitting device 100 is received from the user interface 106 of the transmitting device 100. In this example embodiment, the image is determined to be a new image. Thus, at block 702 of Figure 7B, a unique identifier code is generated (or created) at the transmitting device 100 to associate with the new image. At block 704 of Figure 7B, the user-generated description file 112 of the transmitting device 100 is updated to store the new assembly for the image. At block 706 of Figure 7B, the new image is retrieved, for example, from a camera application or a database. At block 708 of Figure 7B, the local database 102 of the transmitting device 100 is controlled to store the new image with the unique identifier code associated with the new image. The new image is stored at a location specified by the description file 112, namely at the user-generated database 102_{A} of the transmitting device 100. At block 710 of Figure 7B, the user interface 106 of the transmitting device 100 is controlled to display the new image (for example, in a chat window).

At block 712 of Figure 7B, the new image and the unique identifier code associated with the new image is transmitted from the transmitting device 100 via the central database 302 (for example, a client server) to the receiving device 200 over the network 304. The unique identifier code associated with the new image can contain the unique identifier code of the user-generated database 102_{A} of the transmitting device 102 at which the image is stored. The central database 302 stores the new image and the associated unique identifier code at the user-generated database 302_{3-A} of the central database 302, which corresponds to user-generated database 102_{A} the transmitting device 100.

At block 714 of Figure 7B, the new image and the unique identifier code associated with the new image is received at the receiving device 200 from the transmitting device 100. At block 716 of Figure 7B, the correct user-generated database 202_{A} of the receiving device 200 for the new image is confirmed based on information comprised in the user-generated description file 212 of the receiving device 200. At block 718 of Figure 7B, the user-generated description file 212 of the receiving device 200 is then updated to store the new assembly for the image. At block 720 of Figure 7B, the user-generated database 202_{A} comprised in the database 202 of the receiving device 200 is controlled to store the new image. At block 722 of Figure 7B, the user interface 206 of the receiving device 200 is controlled to display the new (for example, in a chat window).

Subsequently, the transmitting device 100 and the receiving device 200 need only transmit the unique identifier code associated with the new image in future communications, as described earlier (for example, with reference to Figure 6B).

Figure 8A is an illustration of an example database structure according to another embodiment. In this illustrated example embodiment, the central database 302 comprises a plurality of standard databases 302₁, 302₂ and each of the standard databases 302₁, 302₂ comprise a plurality of image subsets 302₁₋₁, 302₁₋₂, 302₂₋₁, 302₂₋₂. The central database 302 according to this example embodiment also comprises one or more user-generated databases 302₃, which comprise a plurality of user-generated image subsets 302_{3-A}, 302_{3-B}, 302₃₋ₙ. Each of the user-generated image subsets 302_{3-A}, 302_{3-B}, 302₃₋ₙ comprise a layer database 302_{3-AA}, 302_{3-BB}, 302₃₋ₙₙ. A layer database 302_{3-AA}, 302_{3-BB}, 302₃₋ₙₙ is configured to store one or more overlay images associated with images of the corresponding user-generated image subset 302_{3-A}, 302_{3-B}, 302₃₋ₙ.

As illustrated in Figure 8A, in this example embodiment, the database 202 of the receiving device 200 comprises a subset 202₁. The subset 202₁ itself comprises a plurality of subsets 202₁₋₁, 202₁₋₂, which correspond to the subsets 302₁₋₁, 302₁₋₂ comprised in the standard database 302₁ of the central database 302. In this example embodiment, the database 202 of the receiving device 200 also comprises a plurality of user-generated image subsets 202_{A}, 202_{B}, which correspond to the user-generated image subsets 302_{3-A}, 302_{3-B} comprised in the user-generated database 302₃ of the central database 302. Each of the user-generated image subsets 202_{A}, 202_{B} comprise a layer database 202_{AA}, 202_{BB}, which correspond to the layer databases 302_{3-AA}, 302_{3-BB}, of the central database 302.

The receiving device 200 is in communication with two transmitting devices 100, which each comprise a database 102, according to this example embodiment. The database 102 of each of the transmitting devices 100 comprise the subset 102₁₋₁, which corresponds to the subset 302₁₋₁ comprised in the standard database 302₁ of the central database 302. The database 102 of one of the transmitting devices 100 comprises the user-generated image subset 102_{A}, which corresponds to the user-generated image subset 302_{3-A} comprised in the user-generated database 302₃ of the central database 302. The user-generated image subset 102_{A} comprises a layer database 102_{AA}, which correspond to the layer database 302_{3-AA} of the central database 302. The database 102 of the other transmitting device 100 comprises the user-generated image subset 102_{B}, which corresponds to the user-generated image subset 302_{3-B} comprised in the user-generated database 302₃ of the central database 302. The user-generated image subset 102_{B} comprises a layer database 102_{BB}, which correspond to the layer database 302_{3-BB} of the central database 302.

According to this example embodiment, the central database 302 comprises a description file 310 that indicates information associated with each of the images stored in the central database 302 (for example, the image location) and a description file 312 comprising information identifying the transmitting device 100 and the receiving device 200 (for example, user information). The local database 100 of the transmitting devices and the local database 202 of the receiving device 200 each comprise a description file 110, 210 that indicates information associated with the images stored in the subsets 102₁₋₁, 202₁, 202₁₋₁, 202₁₋₂ of that database 102, 202 and a description file 112, 212 that indicates information associated with the images stored in the user-generated subsets 102_{A}, 102_{B}, 202_{A}, 202_{B} of that database 102, 202.

The local database 102 of each transmitting device 100 also comprises a description file 114 that indicates information associated with one or more overlay images stored in the layer database 102_{AA}, 102_{BB} of the user-generated subset 102_{A}, 102_{B} of that database 102. For example, the description file 114 may comprise any one or more of information indicating a unique identifier code for each overlay image, a location of the overlay image within the layer database 102_{AA}, a unique identifier code for the database containing an image associated with each overlay image (such as an indication of the subset 102₁₋₁ or the user-generated subset 102_{A}), and a unique identifier code of the for the image associated with the overlay image.

Figure 8B is an example illustration of a system 300 in use according to an embodiment. Figure 8B illustrates a method performed by the system 300 that allows creation of overlay images (or layers) to be associated with an image located in a local database of a device. The transmitting device 100 may, for example, be a device of a customer and the receiving device 200 may, for example, be a device of an engineer.

In this example embodiment, the database 102 of the transmitting device 100, the database 202 of the receiving device 200, and the central database 302 can have the configuration illustrated in Figure 8A. The transmitting device 100, the receiving device 200, and the central database 302 communicate over a network 304. The method that will be described with reference to the transmitting device 100 is generally performed by or under the control of the control unit 104 of the transmitting device 100 and, similarly, the method that will be described with reference to the receiving device 200 is generally performed by or under the control of the control unit 204 of the receiving device 200.

With reference to Figure 8B, at block 800, the user initiates at the user interface 106 of the transmitting device 100 layering for an image having a unique identifier code "a1234". In other words, an indication is received at the user interface 106 of the transmitting device 100 that the user wishes to apply an overlay image to the image "a1234". At block 802 of Figure 8B, the description file 112 of the transmitting device 100 is searched for the image "a1234". At block 804 of Figure 8B, the image "a1234" is located in the local database 102 of the transmitting device 100 based on the information comprised in the description file 110 of the transmitting device 100. More specifically, the image "a1234" is located in the user-generated subset 102_{A} of the database 102. At block 806 of Figure 8B, the pixel size for the image "a1234" is checked. This provides the option of acquiring an overlay image having the same pixel size as the image "a1234".

At block 808 of Figure 8B, information linking the overlay image that is to be acquired for application to the image "a1234" is generated. More specifically, a unique identifier code "b456" is generated for the overlay image. At block 810 of Figure 8B, the description file 114 that indicates information associated with overlay images stored in the layer database 102_{AA} of the user-generated subset 102_{A} of the database 102 is updated with the new assembly for the overlay image "b456".

At block 812 of Figure 8B, the user interface 106 of the transmitting device 100 is controlled to display the image "a1234" such that the user can generate the overlay image "b456". For example, the image "a1234" may be displayed in an editing window. At block 814 of Figure 8B, the overlay image "b456" associated with the image "a1234", which is stored in the user-generated subset 102_{A} of the database 102, is acquired by the user generating the overlay image "b456" at the user interface 106. At block 816 of Figure 8B, the user interface 106 of the transmitting device 100 is controlled to display the overlay image "b456" over the associated image "a1234". At block 818 of Figure 8B, the overlay image "b456" and the information linking the overlay image "b456" to the associated image "a1234" is transmitted to the receiving device 200 over the network 304. The transmission of the overlay image "b456" and the information linking the overlay image "b456" to the associated image "a1234" can also comprise any or more of the unique identifier code "b456" for the overlay image, the unique identifier code "a1234" for the associated image, and the unique identifier code for the database containing the associated image.

At block 820 of Figure 8B, the local database 102 of the transmitting device 100 is controlled to store the overlay image "b456" with the information linking the overlay image "b456" to the associated image "a1234". The overlay image "b456" may also be transmitted with the information linking the overlay image "b456" to the associated image for storage "a1234" from the transmitting device 100 to the central database 302 for storage. More specifically, the layer database 302_{3-AA} of the central database 302 that corresponds to the transmitting device 100 is updated with overlay image "b456". A layer description file of the central database 302 may also be updated.

At block 822 of Figure 8B, the receiving device 200 receives from the transmitting device 100 the overlay image and the information linking the overlay image "b456" to the image "a1234" associated with the overlay image "b456". At block 824 of Figure 8B, a check is performed for the correct user-generated subset 202_{A} of the database 202. At block 826 of Figure 8B, the description file 214, which indicates information associated with the overlay image "b456" stored in the layer database 202_{AA} of the user-generated subset 202_{A} of the database 202, is updated with the new assembly for the overlay image "b456". More specifically, the description file 214 maybe updated with the unique identifier code "b456" for the overlay image and the unique identifier code "a1234" for the image associated with the overlay image.

At block 828 of Figure 8B, the description file 212, which indicates information associated with the images stored in the user-generated subsets 202_{A} of the database 202 of the receiving device 200, is parsed (or searched) for the image "a1234" associated with the received overlay image "b456". At block 830 of Figure 8B, the image "a1234" associated with the received overlay image "b456" is retrieved from the local database 202 of the receiving device 200 based on the received information. More specifically, the image "a1234" associated with the received overlay image "b456" is retrieved from the user-generated subset 202_{A} of the database 202. It is possible to retrieve the image "a1234" from the local database 202 of the receiving device 200 since the user-generated subset 202_{A} of the database 202 of the receiving device 200 is a copy of the user-generated subset 102_{A} of the database 102 of the transmitting device 100.

At block 832 of Figure 8B, the user interface 206 of the receiving device 200 is controlled to display the received overlay image "b456" over the retrieved image "a1234". For example, the retrieved image "a1234" is displayed layered with the received overlay image "b456". The overlay image "b456" may be at least partially transparent. Thus, the display may involve stacking the overlay image "b456" over the retrieved image "a1234". In an example, the display may be provided in a communication chat window. At block 834 of Figure 8B, the database 202 of the receiving device 200 is controlled to store the received overlay image "b456". More specifically, the layer database 202_{AA} of the user-generated subset 202_{A} of the database 202 of the receiving device 200 is controlled to store the received overlay image "b456".

Therefore, there is provided herein improved devices and methods of operating those devices to communicate information, which overcome existing problems. The methods and devices described herein can be particularly useful in tele-service applications, tele-health applications, tele-medicine applications, or any other applications where devices that need to communicate are remote from one another.

There is also provided a computer program product comprising a computer readable medium, the computer readable medium having computer readable code embodied therein, the computer readable code being configured such that, on execution by a suitable computer or processor, the computer or processor is caused to perform the method or methods described herein.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A transmitting device (100) for transmitting information to a receiving device (200), the transmitting device (100) comprising:
a local database (102) configured to store a plurality of images received from a central database (302), wherein each image is stored with an associated unique identifier code; and
a control unit (104) operatively coupled to the local database (102), the control unit (104) configured to:
receive from a user interface (106) a request for retrieval of a unique identifier code associated with an image stored in the local database (102);
retrieve from the local database (102) the unique identifier code associated with the image in response to the received request; and
transmit the retrieved unique identifier code to the receiving device (200).

2. A transmitting device (100) as claimed in claim 1, wherein the transmitting device (100) is further configured as a receiving device (200) and the control unit (102) is further configured to:
receive, from at least one other transmitting device, a unique identifier code associated with an image stored in a local database of the at least one other transmitting device; and
retrieve, from the local database (102) of the transmitting device (100), a corresponding image associated with a stored unique identifier code that matches the received unique identifier code.

3. A transmitting device (100) as claimed in any one of the preceding claims, wherein the control unit (104) is further configured to:
acquire a new image;
generate a unique identifier code to associate with the new image; and
control the local database (102) to store the new image with the unique identifier code associated with the new image.

4. A transmitting device (100) as claimed in claim 3, wherein the control unit (104) is further configured to:
transmit the new image and the unique identifier code associated with the new image to the central database (302).

5. A transmitting device (100) as claimed in any one of the preceding claims, wherein the control unit (104) is further configured to:
acquire an overlay image associated with an image stored in the local database (102);
generate information linking the overlay image to the associated image; and
transmit, to the receiving device (200), the overlay image and the information linking the overlay image to the associated image.

6. A transmitting device (100) as claimed in claim 5, wherein the control unit (104) is further configured to:
control the local database (102) to store the overlay image with the information linking the overlay image to the associated image;
transmit, to the central database (302), the overlay image with the information linking the overlay image to the associated image for storage; and/or
control the user interface (106) to display the overlay image over the associated image.

7. A receiving device (200) for receiving information from a transmitting device (100), the receiving device (200) comprising:
a local database (202) configured to store a plurality of images received from a central database (302), wherein each image is stored with an associated unique identifier code; and
a control unit (204) operatively coupled to the local database (202), the control unit (202) configured to:
receive from the transmitting device (100) a unique identifier code associated with an image stored in a local database (102) of the transmitting device (100); and
retrieve from the local database (202) of the receiving device (200) a corresponding image associated with a stored unique identifier code that matches the received unique identifier code.

8. A receiving device (200) as claimed in claim 7, wherein the control unit (204) is further configured to:
control a user interface (206) to display the corresponding image retrieved from the local database (202) of the receiving device (200).

9. A receiving device (200) as claimed in any one of claims 7 or 8, wherein the control unit (204) is further configured to:
receive from the central database (302) a new image and a unique identifier code associated with the new image; and
control the local database (202) of the receiving device (200) to store the new image with the unique identifier code associated with the new image.

10. A receiving device (200) as claimed any one of claims 7 to 9, wherein the control unit (204) is further configured to:
receive, from the transmitting device (100), an overlay image and information linking the overlay image to an image associated with the overlay image;
retrieve, from the local database (202) of the receiving device (200), the image associated with the received overlay image based on the received information; and
control a user interface (206) to display the received overlay image over the retrieved image.

11. A system (300) comprising:
at least one transmitting device (100) as claimed in any one of claims 1 to 6; and
at least one receiving device (200) as claimed in any one of claims 7 to 10.

12. A system (300) as claimed in claim 11, the system further comprising:
a central database (302) in communication with the at least one transmitting device (100) and the at least one receiving device (200), wherein the central database (302) is configured to:
store a plurality of images with associated unique identifier codes for each image, wherein the plurality of images stored in the local database (102) of the at least one transmitting device (100) and the plurality of images stored in the local database (202) of the at least one receiving device (200) are subsets of the plurality of images stored in the central database (302).

13. A system (300) as claimed in any one of claims 11 or 12, wherein:
the plurality of images stored in the local database (102) of the at least one transmitting device (100) is a subset of the plurality of images stored in the local database (202) of the at least one receiving device (200).

14. A method (400) of operating a transmitting device (100), wherein the transmitting device comprises a local database (102) configured to store a plurality of images received from a central database (302) and each image is stored with an associated unique identifier code, the method comprising:
receiving (402) from a user interface (106) a request for retrieval of a unique identifier code associated with an image stored in the local database (102);
retrieving (404) from the local database (102) the unique identifier code associated with the image in response to the received request; and
transmitting (406) the retrieved unique identifier code to the receiving device (200).

15. A method (500) of operating a receiving device (200), wherein the receiving device (200) comprises a local database (202) configured to store a plurality of images received from a central database (302) and each image is stored with an associated unique identifier code, the method comprising:
receiving (502) from the transmitting device (100) a unique identifier code associated with an image stored in a local database (102) of the transmitting device (100); and
retrieving (504) from the local database (202) of the receiving device (200) a corresponding image associated with a stored unique identifier code that matches the received unique identifier code.
